# EUROPEAN PATENT SPECIFICATION

(11) **EP 4 307 450 B1**
(45) Date of publication and mention of the grant of the patent: **29.04.2026**
(21) Application number: 23781409.0
(22) Date of filing: 30.03.2023
(51) Int. Cl.: H01M 50/284, H01M 50/569, H01M 50/186, H01M 50/129, H01M 50/121, H01M 50/119, H01M 50/105, H01M 10/48, H01M 10/42, H01M 50/124

(54) **POUCH-SHAPED BATTERY CELL INCLUDING FLEXIBLE PRINTED CIRCUIT BOARD**
BEUTELARTIGE BATTERIEZELLE MIT FLEXIBLER LEITERPLATTE
CELLULE DE BATTERIE DE TYPE SACHET COMPRENANT UNE CARTE DE CIRCUIT IMPRIMÉ SOUPLE

(30) Priority: 01.04.2022 KR 20220041247
(43) Date of publication of application: 17.01.2024
(73) Proprietor: LG Energy Solution, Ltd., Seoul 07335 (KR)
(72) Inventor: KO, Dong Wan, Daejeon 34122 (KR); KIM, Do Yul, Daejeon 34122 (KR)
(74) Representative: Plasseraud IP
(86) International application number: PCT/KR2023/004310
(87) International publication number: WO 2023/191558

(56) References cited:
- CN-U- 213 212 234
- KR-A- 20130 018 476
- KR-A- 20130 102 337
- KR-A- 20160 123 036
- KR-B1- 101 595 498
- KR-B1- 101 595 498

## Description

### [Technical Field]

This application claims the benefit of priority to Korean Patent Application No. 2022-0041247 filed on April 1, 2022, the disclosure of which is incorporated herein by reference in its entirety.

The present invention relates to a pouch-shaped battery cell including a flexible printed circuit board. More particularly, the present invention relates to a pouch-shaped battery cell including a flexible printed circuit board having increased sealing force at a sealed portion of the pouch-shaped battery cell.

### [Background Art]

With upsurge of global carbon emission regulation, a lithium secondary battery, which is capable of replacing fossil fuels and remarkably reducing by-products generated as the result of energy use, has attracted attention as an environmentally friendly energy source.

The lithium secondary battery includes a pouch-shaped secondary battery manufactured by receiving an electrode assembly in a battery case made of a laminate sheet, a prismatic secondary battery manufactured by receiving an electrode assembly in a battery case made of a metal material, and a cylindrical secondary battery manufactured by receiving an electrode assembly in a battery case made of a metal material. The pouch-shaped secondary battery has advantages of easy shape transformation and high energy density.

Even during normal charging and discharging of the lithium secondary battery, gas is generated as the result of side reaction between lithium ions and an electrolytic solution. When the pressure in a battery cell increases due to gas generated in the battery cell, the battery cell may explode, whereby safety of the battery cell may be affected.

Consequently, it is necessary to always check the pressure in the battery cell in order to secure safety of the battery cell.

In connection therewith, a pressure measurement apparatus of Patent Document 1 includes a pressure sensing device disposed in a pouch-shaped secondary battery so as to project outwards and a pressure transmission device connected to the pressure sensing device, the pressure transmission device being configured to transmit pressure information to an external device.

The pressure sensing device of Patent Document 1 includes a measurement portion located in a case, the measurement portion being configured to measure pressure, a connection terminal located outside the case, the connection terminal being configured to connect the measurement portion to an external measuring instrument, and a penetration portion located between the measurement portion and the connection terminal, the penetration portion being sealed together with the case when the case is sealed.

The penetration portion, which is a part that is sealed together with the case, has a coupling portion with at least a part of an insulating film removed in order to increase the force of sealing the case. An outer surface of the coupling portion may be made of a material that can be easily welded or adhered to the case, such as copper.

Meanwhile, in recent years, the pressure and temperature in a battery cell have been measured using a flexible printed circuit board (FPCB), which is applied to electronic products and is made of a flexible material so as to be freely deformed. The outermost surface of the flexible printed circuit board is generally made of polyimide or polyethylene; however, polyimide or polyethylene has low strength of thermal bonding to polypropylene, of which the innermost layer of a pouch-shaped battery case is made, whereby sealing strength is low. Consequently, there is a need for technology capable of preventing reduction in sealing force when the flexible printed circuit board is disposed so as to extend through a sealed portion of the pouch-shaped battery case.

Patent Document 2 discloses a battery pressure sensor including an upper electrode layer having an electrode pattern, a lower electrode layer having an electrode pattern, and an elastic layer disposed between the upper electrode layer and the lower electrode layer and a battery including the battery pressure sensor.

Patent Document 2 discloses only a structure in which the battery pressure sensor is disposed on an outer surface of the battery, and does not disclose a structure in which the battery pressure sensor is disposed so as to extend through a sealed portion of a pouch-shaped battery cell and technology capable of increasing sealing strength in the structure.

Patent Document 3 relates to a battery cell pressure sensing pad disposed so as to abut a battery cell, wherein the battery cell pressure sensing pad includes a pouch body and a conduit extending from one side of the pouch body, the conduit having an inner space communicating with the pouch body, one end of the conduit communicates with the pouch body, and a pressure sensor is disposed at the other end of the conduit.

Patent Document 3 discloses technology for measuring the pressure of the battery cell but does not provide technology for stably fixing the pressure sensor to a sealed portion of a pouch-shaped battery cell, since the pressure sensor constituting the battery cell pressure sensing pad is not mounted to the battery cell.

Consequently, there is a need for technology capable of stably fixing a flexible printed circuit board when the flexible printed circuit board is disposed so as to extend through a sealed portion of a pouch-shaped battery cell, securing sealing strength of the pouch-shaped battery cell, and continuously checking the pressure in the pouch-shaped battery cell, thereby improving safety of the pouch-shaped battery cell.
(Patent Document 0) Korean Patent Application Publication No. 2015-0120155A (2015.10.27)
(Patent Document 1) Korean Patent Application Publication No. 2021-0143603 (2021.11.29)
(Patent Document 2) Korean Patent Application Publication No. 2019-0090340 (2019.08.01)
(Patent Document 3) Korean Patent Application Publication No. 2021-0110921 (2021.09.10)

### [Disclosure]

### [Technical Problem]

The present invention has been made in view of the above problems, and it is an object of the present invention to provide a pouch-shaped battery cell including a flexible printed circuit board configured such that, when the flexible printed circuit board is disposed so as to extend through a sealed portion of a pouch-shaped battery cell, the flexible printed circuit board can be stably fixed and sealing strength of the pouch-shaped battery cell can be secured.

### [Technical Solution]

In order to accomplish the above object, the present invention provides a pouch-shaped battery cell including a flexible printed circuit board (FPCB) having a circuit layer disposed at one surface or each of opposite surfaces thereof, wherein the flexible printed circuit board includes a plating portion having plating formed thereon disposed at the outermost surface of the part of the flexible printed circuit board that abuts a sealed portion at which a pouch-shaped battery case is sealed.

The plating may be consisting of: gold plating or nickel plating.

The plating of the plating portion may have a thickness of 3 µm to 6 µm.

A thermal bonding film may be disposed between an outer surface of the plating portion and the sealed portion.

A first end and a second end of the flexible printed circuit board may be located inside the pouch-shaped battery case and outside the pouch-shaped battery case, respectively.

A pressure sensor may be disposed at the first end, and a connector, to which an external terminal is connected, may be disposed at the second end.

The pouch-shaped battery cell may be sealed as the result of thermal bonding of an outer periphery of the pouch-shaped battery case, the pouch-shaped battery case including an outer protective layer, a metal layer, and an inner adhesive layer.

The flexible printed circuit board may include a conduction layer, a base layer located at one surface of the conduction layer, the base layer being made of an insulative material, and a cover layer configured to protect the conduction layer.

Each of the base layer and the cover layer may include at least one of polyethylene or polyimide, and the inner adhesive layer may include a polypropylene-based material.

The present invention provides a battery pack including the pouch-shaped battery cell as a unit battery cell.

In addition, the present invention may provide various combinations of the above constructions.

### [Advantageous Effects]

As is apparent from the above description, in a pouch-shaped battery cell according to the present invention, a plating portion is added to the part of an outer surface of a flexible printed circuit board that abuts a sealed portion of a pouch-shaped battery case, and a thermal bonding film configured to increase sealing strength is added between the sealed portion and the plating portion, whereby it is possible to secure the force of adhesion between the thermal bonding film and the flexible printed circuit board.

In addition, sealing strength between the flexible printed circuit board and the pouch-shaped battery cell is increased, whereby it is possible to prevent leakage of an electrolytic solution due to low sealing strength.

### [Description of Drawings]

FIG. 1 is a perspective view of a pouch-shaped battery cell according to the present invention.
FIG. 2 is a vertical sectional view of a flexible printed circuit board.
FIG. 3 is a sectional photograph of a flexible printed circuit board having a plating portion and a thermal bonding film attached thereto.
FIG. 4 is a sectional photograph of a flexible printed circuit board after a leakage test thereof.
FIG. 5 is a plan photograph of a pouch-shaped battery cell manufactured according to a comparative example.
FIG. 6 is a plan photograph of a flexible printed circuit board after an immersion test thereof.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

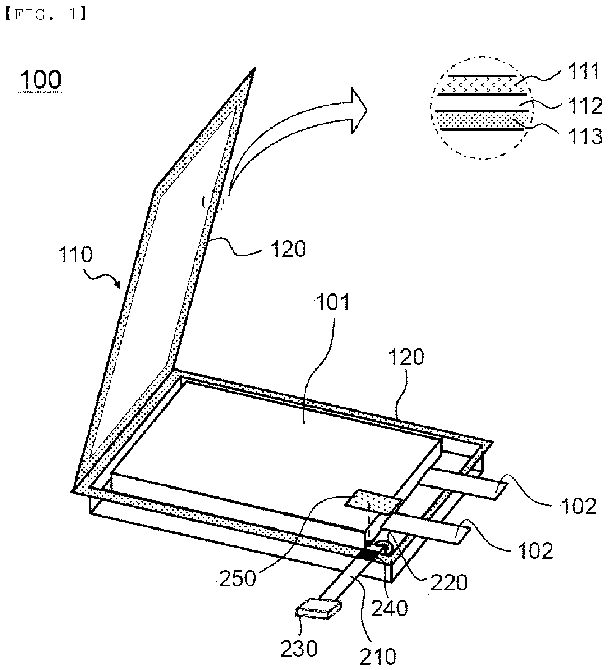

FIG. 1 is a perspective view of a pouch-shaped battery cell according to the present invention.

Referring to FIG. 1, the pouch-shaped battery cell 100 according to the present invention is configured such that a flexible printed circuit board 210 is disposed so as to cross a sealed portion 120 and a plating portion 240 having plating formed thereon is added to the outermost surface of the part of the flexible printed circuit board 210 that abuts the sealed portion 120, at which a pouch-shaped battery case 110 is sealed.

The flexible printed circuit board 210 includes a conduction layer, a base layer located at one surface of the conduction layer, the base layer being made of an insulative material, and a cover layer configured to protect the conduction layer.

The conduction layer may be made of copper, which exhibits high electrical conductivity. The base layer serves as a support configured to support the conduction layer and also serves as an insulator configured to prevent electrical conduction to a direction different from a circuit direction. The base layer may be made of at least one of polyethylene and polyimide, which are insulative materials. The cover layer serves to cover a circuit formed at the conduction layer in order to protect the circuit. The cover layer is formed by coating the base layer with a thermosetting adhesive. An epoxy-based adhesive may be used as the thermosetting adhesive.

A description of a conduction layer, a base layer, and a cover layer constituting a conventional flexible printed circuit board may be equally applied to the conduction layer, the base layer, and the cover layer of the flexible printed circuit board. The planar shape of the flexible printed circuit board may be a straight shape or a stepped shape having a bent shape, although the planar shape of the flexible printed circuit board is not particularly restricted.

The flexible printed circuit board may be a single-sided FPCB configured such that a circuit layer is disposed at one surface of the base layer, a double-sided FPCB configured such that a circuit layer is disposed at each of opposite surfaces of the base layer, or a multilayered FPCB configured such that three or more circuit layers are laminated in the state in which the insulative base layer is interposed therebetween.

A first end of the flexible printed circuit board 210 is located in the pouch-shaped battery cell 100, and a pressure sensor 220 is provided at the first end. A second end of the flexible printed circuit board 210 is located outside the pouch-shaped battery cell 100, and a connector 230, to which an external terminal is connected, may be coupled to the second end.

Since the pouch-shaped battery cell 100 according to the present invention is configured such that the pressure sensor 220, which is configured to measure the pressure in the pouch-shaped battery cell, is disposed in the pouch-shaped battery case 110, as described above, it is possible to measure the pressure in the pouch-shaped battery cell in real time. Consequently, it is possible to stop charging of the pouch-shaped battery cell before explosion thereof, whereby it is possible to prevent explosion of the pouch-shaped battery cell.

The pouch-shaped battery case 110 includes an outer protective layer 111, a metal layer 112, and an inner adhesive layer 113, and an upper case and a lower case are sealed by thermal bonding in the state in which outer peripheries thereof overlap each other.

Between the outer protective layer 111 and the metal layer 112 and between the metal layer 112 and the inner adhesive layer 113, an adhesive layer may be optionally further provided in order to achieve adhesion therebetween.

The outer protective layer serves to protect the battery cell from the outside. Consequently, it is required for the outer protective layer to exhibit excellent tolerance to the external environment, and predetermined tensile strength and weather resistance of the outer protective layer are required. In this aspect, a polymer resin of the outer protective layer may include polyethylene naphthalate (PEN), polyethylene terephthalate (PET), or oriented nylon, which exhibits excellent tensile strength and weather resistance.

The metal layer may be made of aluminum (Al) or an aluminum alloy in order to exhibit a function of improving shapeability and strength of the pouch-shaped battery case in addition to a function of preventing introduction of foreign matter, such as gas and moisture, or leakage of an electrolytic solution.

A polymer resin that exhibits thermal bondability, has low hygroscopicity to the electrolytic solution, and is not expanded or eroded by the electrolytic solution may be used as the inner adhesive layer. Specifically, a polypropylene-based resin may be used. More specifically, the inner adhesive layer may be made of a cast polypropylene (CPP) film.

In a preferred example, the pouch-shaped battery case according to the present invention may be configured to have a structure in which the thickness of the outer protective layer is 5 µm to 40 µm, the thickness of the metal layer is 20 µm to 150 µm, and the thickness of the inner adhesive layer is 10 µm to 50 µm. If the thickness of each layer of the pouch-shaped battery case is too small, it is difficult to achieve a material blocking function and strength improvement, which is undesirable. On the other hand, if the thickness of each layer of the pouch-shaped battery case is too large, formability is reduced and an increase in the thickness of the sheet is caused, which is also undesirable.

An electrode assembly 101 includes a stacked type electrode assembly, a jelly-roll type electrode assembly, a stacked and folded type electrode assembly, and a laminated and stacked electrode assembly. The electrode assembly 101 is shown as having a structure in which electrode leads 102 protrude from one side of an outer periphery thereof. Unlike this, however, an electrode assembly configured to have a structure in which two electrode leads protrude in different directions may be included.

The pouch-shaped battery cell 100 according to the present invention is configured such that the first end and the second end of the flexible printed circuit board 210 including the pressure sensor 220 and the connector 230 are fixed in a state of extending through the sealed portion 120 so as to be located in and outside the pouch-shaped battery case 110, respectively.

The outermost surface of the flexible printed circuit board 210 is generally made of polyethylene or polyimide, which has low adhesive force when being thermally bonded with a thermal bonding film 250 made of a polypropylene-based resin. As a result, the part of the sealed portion 120 through which the flexible printed circuit board 210 extends may be poorly sealed, whereby the electrolytic solution may leak therefrom.

In the present invention, therefore, the plating portion 240 is added to the outermost surface of the part of the flexible printed circuit board 210 that abuts the sealed portion 120 of the pouch-shaped battery case 110 based on the fact that the plating portion 240 plated with metal has excellent force of adhesion to the thermal bonding film 250 made of the polypropylene-based resin. Consequently, it is possible to provide a pouch-shaped battery cell having increased force of adhesion between the plating portion 240 and the thermal bonding film 250.

For example, gold plating or nickel plating may be used as the plating of the plating portion provided in order to increase the force of adhesion to the thermal bonding film, although the kind of the plating is not restricted as long as it is possible to increase the force of adhesion to the thermal bonding film while not inducing chemical change in the pouch-shaped battery cell.

In addition, the thickness of the plating of the plating portion 240 may be 3 µm to 6 µm.

If the thickness of the plating is less than 3 µm, it is difficult to achieve the purpose of forming the plating portion in order to increase the force of adhesion to the thermal bonding film, which is undesirable. If the thickness of the plating is greater than 6 µm, the force of sealing the pouch-shaped battery case may be reduced due to a step formed by the thickness of the plating portion, which is also undesirable.

The thicknesses of the plating portions formed on opposite surfaces of the FPCB may be different from each other; however, the thickness of the plating portion formed on each surface thereof may be uniform.

In a concrete example, the thermal bonding film 250 is added between an outer surface of the plating portion 240 and the sealed portion 120 in order to increase the force of coupling between the flexible printed circuit board 210 and the pouch-shaped battery case 110. The thermal bonding film 250 may be made of the same material as the inner adhesive layer of the pouch-shaped battery case 110, i.e. a polypropylene-based material. The thermal bonding film 250 may be disposed at an outer surface of the flexible printed circuit board 210, whereby it is possible to increase the force of adhesion of the flexible printed circuit board 210 to the pouch-shaped battery case 110. In addition, the pouch-shaped battery case is stepped due to the thickness of the flexible printed circuit board increased as the result of disposition of the thermal bonding film, whereby it is possible to prevent reduction in sealing force of the pouch-shaped battery case.

A sensor using piezoresistive technology may be used as the pressure sensor 220. Specifically, the pressure sensor may be disposed at an inner bottom of a housing, potting gel may be provided above the pressure sensor, and the pressure sensor may measure the pressure of gas introduced through an opening formed in the housing applied to the potting gel.

The pressure sensor 220 may be designed so as to have a Wheatstone bridge in order to convert the pressure applied to the potting gel into an electrical signal.

The pressure sensor 220 disposed in the pouch-shaped battery cell 100 may be located at a position adjacent to the electrode lead 102 projecting from the electrode assembly 101.

Opposite sides of the electrode lead are spaces considered as a dead space in the pouch-shaped battery case 110, and the pouch-shaped battery cell is not deformed and the overall volume of the pouch-shaped battery cell is not increased even though the pressure sensor 220 is disposed as shown in FIG. 1.

In addition, since the pressure sensor 220 is provided to measure the pressure in the pouch-shaped battery cell 100, it is preferable for the pressure sensor to be disposed at a position adjacent to the electrode lead 102 considered as the dead space in the pouch-shaped battery case 110 or next to an electrode tab-electrode lead coupling portion such that the pressure sensor is not affected by pressure generated due to swelling of the electrode assembly 101.

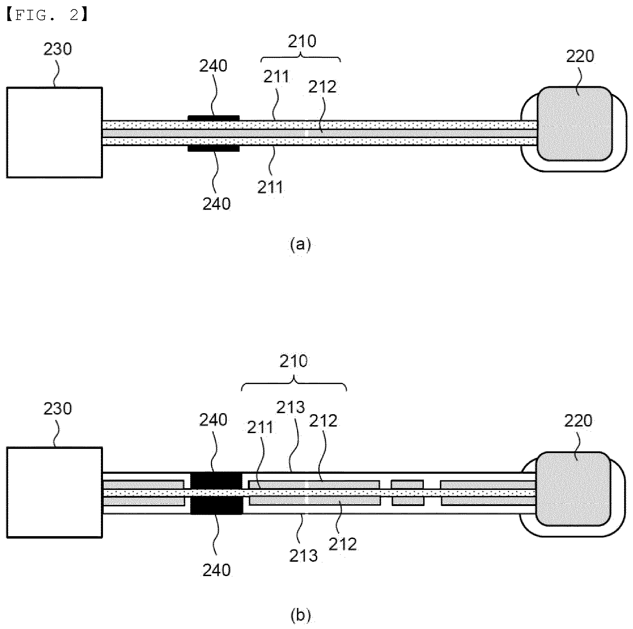

FIG. 2 is a vertical sectional view of a flexible printed circuit board.

Referring to FIG. 2, two kinds of flexible printed circuit boards, to opposite ends of each of which a connector 230 and a pressure sensor 220 are coupled, respectively, are shown.
(a) The flexible printed circuit board 210 is configured such that a base layer 211 is adhered to each of opposite surfaces of a conduction layer 212 that forms a circuit. The base layer 211 may be made of polyethylene or polyimide. These materials have low force of adhesion to the inner adhesive layer of the pouch-shaped battery case. If the pouch-shaped battery case is sealed in the state in which the flexible printed circuit board is disposed in the sealed portion of the pouch-shaped battery case, therefore, the electrolytic solution may leak due to poor sealing.

A plating portion 240 may be formed at the part of the outer surface of the base layer 211 disposed in the sealed portion of the pouch-shaped battery case in order to increase sealing force. In addition, a thermal bonding film may be further attached to a surface of the plating portion 240 in order to further increase the force of sealing between the plating portion 240 and the pouch-shaped battery case.

(b) The flexible printed circuit board 210 is shown as a double-sided FPCB configured such that a conduction layer 212 having a circuit formed thereon is adhered to each of opposite surfaces of a base layer 211 and a cover layer 213 is added so as to wrap the conduction layer 212. In the present invention, however, the flexible printed circuit board may include a single-sided FPCB and a multilayered FPCB.

The connector 230, which is provided for electrical connection with an external terminal, is coupled to the left side of each of the flexible printed circuit boards 210, and the pressure sensor 220 is attached to the right side thereof. The pressure sensor 220 may measure the pressure in the pouch-shaped battery cell and may transmit pressure information to an external device through communication.

(b) In the flexible printed circuit board 210, the part of the outer surface of the base layer 211 at which the conduction layer 212 and the cover layer 213 are not formed constitutes the outermost surface of the base layer 211. The base layer 211, which is made of polyethylene or polyimide, has low force of adhesion to the inner adhesive layer of the pouch-shaped battery case. In order to overcome this, a plating portion 240 is formed at the part of the outer surface of the base layer 211 located in the sealed portion of the pouch-shaped battery case. In addition, a thermal bonding film is further attached to a surface of the plating portion 240, whereby it is possible to further increase the force of sealing between the plating portion 240 and the pouch-shaped battery case.

Alternatively, when the conduction layer 212 and the cover layer 213 are located in the sealed portion of the pouch-shaped battery case, the plating portion 240 may be formed on the cover layer 213, or the cover layer 213 may be removed such that the conduction layer 212 is exposed. When the conduction layer 212 is exposed, as described above, no plating portion may be formed, since the conduction layer 212 has excellent force of adhesion to the inner adhesive layer of the pouch-shaped battery case or the thermal bonding film.
(a) In the flexible printed circuit board 210, the plating thickness of the plating portion 240 may be 3 µm to 6 µm. Within the range, the thickness of the upper plating portion and the thickness of the lower plating portion may be different from each other; however, each plating portion may be formed so as to have a uniform thickness.
(b) In the flexible printed circuit board 210, the plating thickness of the plating portion 240 is shown as corresponding to the maximum thickness of the cover layer 213 added to the conduction layer 212. In consideration of the fact that only the plating portion 240 is disposed in the sealed portion of the pouch-shaped battery case, however, the thickness of the plating portion 240 may be formed irrespective of the thickness of each of the conduction layer and the cover layer, and the thickness of the plating portion may be formed so as to be less than the maximum thickness of the cover layer 213 added to the conduction layer 212.

In consideration of the fact that the flexible printed circuit board 210 is disposed between the upper case and the lower case of the pouch-shaped battery case, increase in adhesive force at the interface between the flexible printed circuit board 210 and the pouch-shaped battery case is required. Consequently, the plating portion 240 may be formed on each of an upper surface and a lower surface of the base layer 211.

In the present invention, as described above, the plating portion is formed on the part of the outer surface of the base layer of the flexible printed circuit board disposed in the sealed portion of the pouch-shaped battery case, whereby it is possible to increase the force of adhesion to the sealed portion of the pouch-shaped battery case. In addition, the thermal bonding film is disposed between the plating portion of the flexible printed circuit board and the pouch-shaped battery case, whereby it is possible to further increase the force of adhesion between the flexible printed circuit board and the pouch-shaped battery case, and therefore it is possible to prevent leakage of the electrolytic solution.

Hereinafter, the present invention will be described with reference to the following example. The example is provided only for easier understanding of the present invention and the scope of the present invention is not limited thereby.

### <Example>

In order to check the force of adhesion between a flexible printed circuit board and a pouch-shaped battery case, a thermal bonding film, made of the same material as an inner adhesive layer of the pouch-shaped battery case, and the flexible printed circuit board were prepared.

A part of the flexible printed circuit board was plated with nickel to form a plating portion on each of opposite surfaces of the flexible printed circuit board.

In order to attach the thermal bonding film to an outer surface of the plating portion, the flexible printed circuit board having the plating portion formed thereon and the thermal bonding film were disposed in a pressing jig and were pressed while being heated to a temperature of 160°C or higher.

### <Comparative Example>

A flexible printed circuit board having no plating portion formed thereon was mounted to a pouch-shaped battery case in the state in which no thermal bonding film was applied to the flexible printed circuit board and the pouch-shaped battery case was sealed by thermal bonding to manufacture a pouch-shaped battery cell.

### <Experimental Example 1> Appearance inspection

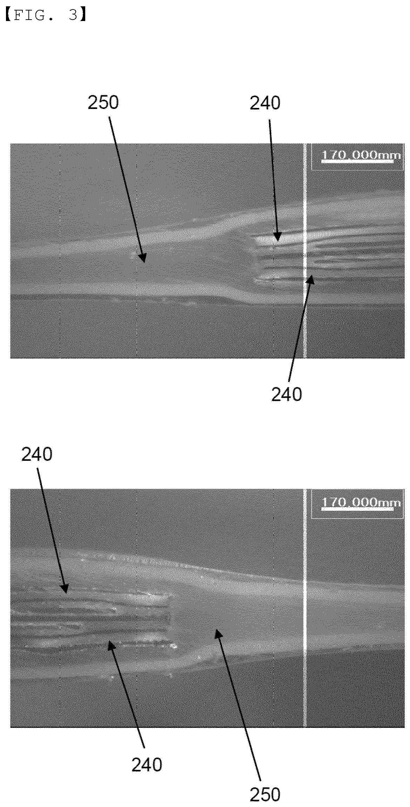

Appearance inspection was performed on the flexible printed circuit board having the thermal bonding film attached to the plating portion thereof manufactured according to Example, and FIG. 3 is a sectional photograph of the flexible printed circuit board having the plating portion and the thermal bonding film attached thereto.

Referring to FIG. 3, an upper part of the figure is a left sectional view, and a lower part of the figure is a right sectional view. It can be confirmed that the thermal bonding film 250 was attached to the entirety of an outer surface of the plating portion 240 in tight contact therewith.

In consideration of the fact that the thermal bonding film and the inner adhesive layer of the pouch-shaped battery case are made of the same material, it can be expected that, even when the pouch-shaped battery case is thermally bonded in the state in which the flexible printed circuit board having the plating portion formed thereon is disposed in a sealed portion of the pouch-shaped battery case, it is possible to secure excellent adhesive force.

### <Experimental Example 2> Leakage test

The flexible printed circuit board having the thermal bonding film attached to the plating portion thereof manufactured according to Example was cut, a penetrant was introduced into the flexible printed circuit board for 5 minutes, the penetrant attached to an outer surface of the flexible printed circuit board was removed, and the section of the flexible printed circuit board was observed using a microscope.

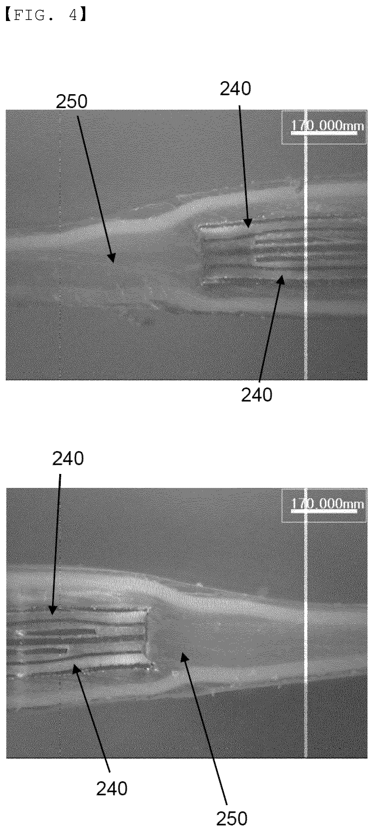

FIG. 4 is a sectional photograph of the flexible printed circuit board after the leakage test thereof.

Referring to FIG. 4, an upper part of the figure is a left sectional view, and a lower part of the figure is a right sectional view. It can be confirmed that the penetrant did not penetrate the plating portion 240 and the thermal bonding film 250, whereby it can be seen that the state of adhesion between the plating portion 240 and the thermal bonding film 250 is stably maintained.

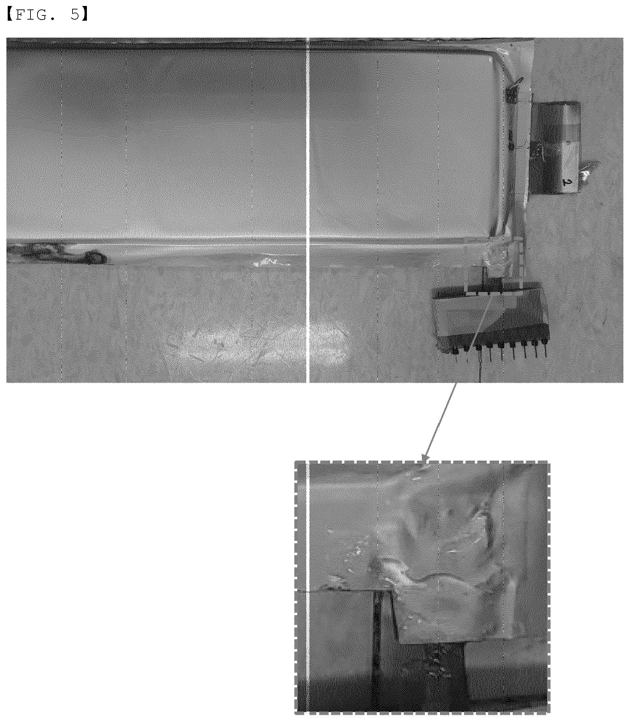

FIG. 5 is a plan photograph of the pouch-shaped battery cell manufactured according to Comparative Example.

Referring to FIG. 5, no plating portion was formed at the flexible printed circuit board and no thermal bonding film was attached to the flexible printed circuit board, and therefore it can be confirmed that an electrolytic solution leaked from a sealed portion of the pouch-shaped battery cell, through which the flexible printed circuit board extended.

Since polyethylene or polyimide used at the outermost surface of the flexible printed circuit board has low force of adhesion to the inner adhesive layer of the pouch-shaped battery case mainly made of polypropylene, the pouch-shaped battery case is not sealed at the part of the pouch-shaped battery case through which the flexible printed circuit board extends.

As a result, the electrolytic solution may leak, and external matter may be introduced into the pouch-shaped battery cell.

### <Experimental Example 3> Immersion test

A pouch having 1,000 ppm of moisture and an electrolytic solution contained therein was prepared. The flexible printed circuit board having the thermal bonding film attached to the plating portion thereof manufactured according to Example was put in the pouch, was kept in the pouch at 80°C for 24 hours, and was placed at room temperature for 1 hour.

The thermal bonding film attached to the flexible printed circuit board was pulled in opposite directions while being held by hand in order to check whether the flexible printed circuit board and the thermal bonding film were separated from each other.

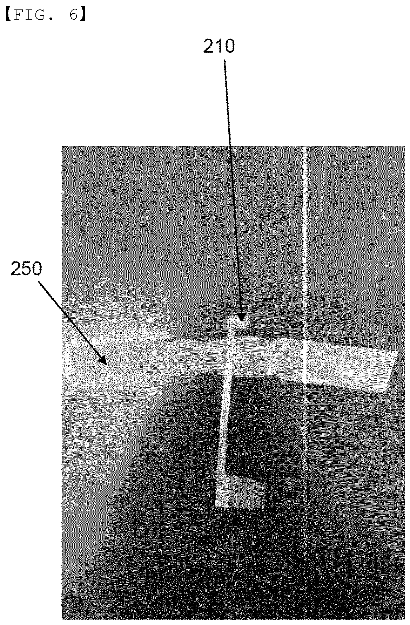

FIG. 6 is a plan photograph of the flexible printed circuit board after the immersion test thereof.

Referring to FIG. 6, it can be confirmed that the thermal bonding film 250 was extended by tension acting in opposite directions, whereby the thermal bonding film was unevenly deformed; however, the thermal bonding film 250 was not separated from the flexible printed circuit board 210 but was maintained in a state of being adhered to the flexible printed circuit board.

When the flexible printed circuit board is plated with gold or nickel, as described above, it is possible to increase the force of adhesion between the pouch-shaped battery case and the flexible printed circuit board.

Those skilled in the art to which the present invention pertains will appreciate that various applications and modifications are possible within the category of the present invention based on the above description. The scope of protection is solely defined by the appended claims.

### (Description of Reference Numerals)

100: Pouch-shaped battery cell
101: Electrode assembly
102: Electrode lead
110: Pouch-shaped battery case
111: Outer protective layer
112: Metal layer
113: Inner adhesive layer
120: Sealed portion
210: Flexible printed circuit board
211: Base layer
212: Conduction layer
213: Cover layer
220: Pressure sensor
230: Connector
240: Plating portion
250: Thermal bonding film

## Claims

1. A pouch-shaped battery cell (100) comprising a pouch-shaped battery case (110), a flexible printed circuit board (FPCB) (210) crossing a sealed portion (120) at which the pouch-shaped battery case (110)is sealed, wherein
the flexible printed circuit board (210) comprises a plating portion (240) having plating formed thereon disposed at an outermost surface of a part of the flexible printed circuit board (210) that abuts the sealed portion (120).

2. The pouch-shaped battery cell (100) according to claim 1, wherein the plating is consisting of: gold plating or nickel plating.

3. The pouch-shaped battery cell (100) according to claim 1, wherein the plating of the plating portion (240) has a thickness of 3 µm to 6 µm.

4. The pouch-shaped battery cell (100) according to claim 1, wherein a thermal bonding film (250) is disposed between an outer surface of the plating portion (240) and the sealed portion (120).

5. The pouch-shaped battery cell (100) according to claim 1, wherein a first end and a second end of the flexible printed circuit board (210) are located inside the pouch-shaped battery case (110) and outside the pouch-shaped battery case (110), respectively.

6. The pouch-shaped battery cell (100) according to claim 5, wherein
a pressure sensor (220) is disposed at the first end, and
a connector (230), to which an external terminal is connected, is disposed at the second end.

7. The pouch-shaped battery cell (100) according to claim 1, wherein the pouch-shaped battery cell (100) is sealed as a result of thermal bonding of an outer periphery of the pouch-shaped battery case (110), the pouch-shaped battery case (110) comprising an outer protective layer (111), a metal layer (112), and an inner adhesive layer (113).

8. The pouch-shaped battery cell (100) according to claim 1, wherein the flexible printed circuit board (210) comprises:
a conduction layer (212);
a base layer (211) located at one surface of the conduction layer (212), the base layer (211) being made of an insulative material; and
a cover layer (213) configured to protect the conduction layer (212).

9. The pouch-shaped battery cell (100) according to claim 7, wherein
each of the base layer (211) and the cover layer (213) comprises at least one of: polyethylene or polyimide, and
the inner adhesive layer (113) comprises a polypropylene-based material.

10. A battery pack comprising the pouch-shaped battery cell (100) according to any one of claims 1 to 9 as a unit battery cell.

## Patentansprüche

1. Beutelförmige Batteriezelle (100), umfassend ein beutelförmiges Batteriegehäuse (110), wobei eine flexible gedruckte Schaltungsplatine (FPCB) (210) einen abgedichteten Abschnitt (120) überkreuzt, an welchem das beutelförmige Batteriegehäuse (110) abgedichtet ist, wobei
die flexible gedruckte Schaltungsplatine (210) einen Beschichtungsabschnitt (240) umfasst, welcher eine darauf gebildete Beschichtung aufweist, welche an einer äußersten Fläche eines Teils der flexiblen bedruckten Schaltungsplatine (210) gebildet ist, welche an dem abgedichteten Abschnitt (120) anliegt.

2. Beutelförmige Batteriezelle (100) nach Anspruch 1, wobei die Beschichtung besteht aus: einer Goldbeschichtung oder einer Nickelbeschichtung.

3. Beutelförmige Batteriezelle (100) nach Anspruch 1, wobei die Beschichtung des Beschichtungsabschnitts (240) eine Dicke von 3 µm bis 6 µm aufweist.

4. Beutelförmige Batteriezelle (100) nach Anspruch 1, wobei ein thermischer Bondierungsfilm (250) zwischen einer äußeren Fläche des Beschichtungsabschnitts (240) und des abgedichteten Abschnitts (120) angeordnet ist.

5. Beutelförmige Batteriezelle (100) nach Anspruch 1, wobei sich ein erstes Ende und ein zweites Ende der flexiblen gedruckten Schaltungsplatine (210) in einem Inneren des beutelförmigen Batteriegehäuses (110) beziehungsweise an einem Äußeren des beutelförmigen Batteriegehäuses (110) befinden.

6. Beutelförmige Batteriezelle (100) nach Anspruch 5, wobei
ein Drucksensor (220) an dem ersten Ende angeordnet ist, und
eine Verbindungseinheit (230), an welche ein externer Anschluss verbunden ist, an dem zweiten Ende angeordnet ist.

7. Beutelförmige Batteriezelle (100) nach Anspruch 1, wobei die beutelförmige Batteriezelle (100) als ein Ergebnis einer thermischen Bondierung eines äußeren Umfangs des beutelförmigen Batteriegehäuses (110) abgedichtet ist, wobei das beutelförmige Batteriegehäuse (110) eine äußere schützende Schicht (111), eine Metallschicht (112) und eine innere Haftmittelschicht (113) umfasst.

8. Beutelförmige Batteriezelle (100) nach Anspruch 1, wobei die flexible gedruckte Schaltungsplatine (210) umfasst:
eine Leitungsschicht (212);
eine Basisschicht (211), welche sich an einer Fläche der Leitungsschicht (212) befindet, wobei die Basisschicht (211) aus einem isolierenden Material hergestellt ist; und
eine Abdeckungsschicht (213), welche dazu eingerichtet ist, die Leitungsschicht (212) zu schützen.

9. Beutelförmige Batteriezelle (100) nach Anspruch 7, wobei jede aus der Basisschicht (211) und der Abdeckungsschicht (213) wenigstens eines umfasst aus: Polyethylen oder Polyimid, und
die innere Haftmittelschicht (113) ein polypropylen-basiertes Material umfasst.

10. Batteriepack, welcher die beutelförmige Batteriezelle (100) nach einem der Ansprüche 1 bis 9 als eine Einheitsbatteriezelle umfasst.

## Revendications

1. Cellule de batterie en forme de poche (100) comprenant un boîtier de batterie en forme de poche (110), une carte de circuit imprimé souple (FPCB) (210) traversant une partie scellée (120) au niveau de laquelle le boîtier de batterie en forme de poche (110) est scellé, dans laquelle
la carte de circuit imprimé souple (210) comprend une partie de placage (240) sur laquelle est formé un placage disposé au niveau d'une surface la plus externe d'une partie de la carte de circuit imprimé souple (210) qui vient en butée contre la partie scellée (120).

2. Cellule de batterie en forme de poche (100) selon la revendication 1, dans laquelle le placage est constitué : d'un plaquage d'or ou d'un placage de nickel.

3. Cellule de batterie en forme de poche (100) selon la revendication 1, dans laquelle le placage de la partie de placage (240) a une épaisseur de 3 µm à 6 µm.

4. Cellule de batterie en forme de poche (100) selon la revendication 1, dans laquelle un film de collage thermique (250) est disposé entre une surface externe de la partie de placage (240) et la partie scellée (120).

5. Cellule de batterie en forme de poche (100) selon la revendication 1, dans laquelle une première extrémité et une deuxième extrémité de la carte de circuit imprimé souple (210) sont respectivement situées à l'intérieur du boîtier de batterie en forme de poche (110) et à l'extérieur du boîtier de batterie en forme de poche (110).

6. Cellule de batterie en forme de poche (100) selon la revendication 5, dans laquelle un capteur de pression (220) est disposé à la première extrémité, et
un connecteur (230), auquel est connectée une borne externe, est disposé à la deuxième extrémité.

7. Cellule de batterie en forme de poche (100) selon la revendication 1, dans laquelle la cellule de batterie en forme de poche (100) est scellée à la suite d'un collage thermique d'une périphérie externe du boîtier de batterie en forme de poche (110), le boîtier de batterie en forme de poche (110) comprenant une couche de protection externe (111), une couche métallique (112) et une couche adhésive interne (113).

8. Cellule de batterie en forme de poche (100) selon la revendication 1, dans laquelle la carte de circuit imprimé souple (210) comprend :
une couche de conduction (212) ;
une couche de base (211) située au niveau d'une surface de la couche de conduction (212), la couche de base (211) étant faite d'un matériau isolant ; et
une couche de couverture (213) configurée pour protéger la couche de conduction (212).

9. Cellule de batterie en forme de poche (100) selon la revendication 7, dans laquelle chacune de la couche de base (211) et de la couche de couverture (213) comprend au moins un parmi : du polyéthylène ou du polyimide, et
la couche adhésive interne (113) comprend un matériau à base de polypropylène.

10. Bloc-batterie comprenant la cellule de batterie en forme de poche (100) selon l'une quelconque des revendications 1 à 9 en tant que cellule de batterie unitaire.
